# EUROPEAN PATENT APPLICATION

(11) **EP 2 816 446 A1**
(43) Date of publication of application: **24.12.2014**
(21) Application number: 14171740.5
(22) Date of filing: 10.06.2014
(51) Int. Cl.: G06F 3/01, G06F 3/023, G06F 3/03

(54) **User interface comprising radial layout soft keypad**

(30) Priority: 20.06.2013 US 201361837604 P; 26.11.2013 US 201314090670
(71) Applicant: LSI Corporation, San Jose, CA 95131 (US)
(72) Inventor: Counsell, Dustin, Mendota Heights, MN 55120 (US); Pham, Hieu D., San Jose, CA 95131 (US); MacDonald, James F., Mendota Heights, MN 55120 (US); Brickner, Barrett J., Mendota Heights, MN 55120 (US)
(74) Representative: Dilg, Haeusler, Schindelmann Patentanwaltsgesellschaft mbH

(57) **Abstract**

A processing device is configured to provide a user interface comprising a radial layout soft keypad. The radial layout soft keypad comprises a central region and one or more concentric groupings of keys arranged around the central region. For example, the one or more concentric groupings of keys may be arranged as multiple concentric circular rows of keys substantially surrounding the central region, with all of the keys of the concentric circular rows being simultaneously visible in the radial layout soft keypad. The radial layout soft keypad is illustratively presented on a display associated with the processing device and a user interacts with the radial layout soft keypad by making hand gestures in free space in a field of view of an image sensor. A gesture of a first type controls selection of a key and gestures of second and third types control acceptance and rejection of the selected key.

## Description

### Priority Claim

The present application claims the priority of U.S. Provisional Patent Application Serial No. 61/837,604, filed June 20, 2013, the disclosure of which is incorporated by reference herein in its entirety.

### Field of Invention

The field relates generally to user interfaces, and more particularly to techniques for entering information into or otherwise interacting with a user interface.

### Background

A wide variety of different user interfaces exist for inputting text or other information into to a processing device or system such as a computer, television, mobile telephone or gaming system. For example, some processing devices or systems incorporate gesture recognition (GR) functionality in order to allow a user to enter information using particular hand gestures. Unfortunately, conventional GR-based user interfaces are not particularly well suited for certain types of information entry, such as entering sequences of text characters. Possible alternatives for text entry in GR-based systems include but are not limited to traditional keypads, flow-keypads, or speech to text conversion. Nonetheless, a need exists for more efficient user interfaces that are well suited for use in entering text and other information in GR-based systems as well as in other types of devices and systems.

### Summary

In one embodiment, a processing device comprising a processor coupled to a memory is configured to provide a user interface that includes a radial layout soft keypad. The radial layout soft keypad comprises a central region and one or more concentric groupings of keys arranged around the central region.

By way of example only, the one or more concentric groupings of keys may be arranged as multiple concentric circular rows of keys substantially surrounding the central region. In such an arrangement, all of the keys of the concentric circular rows may be simultaneously visible in the radial layout soft keypad.

In some embodiments, the radial layout soft keypad is presented on a display associated with the processing device and a user interacts with the radial layout soft keypad by making hand gestures in free space in a field of view of an image sensor without physically contacting the display.

A variety of different types of hand gestures may be used to interact with the radial layout soft keypad. For example, the processing device can be configured such that a gesture of a first type controls selection of a key and gestures of second and third types control acceptance and rejection of the selected key. At least a subset of these gestures may include respective flick gestures made using a pointing finger.

### Brief Description of the Figures

FIG. 1 is a block diagram of an information processing system having a graphical user interface comprising a radial layout soft keypad in an illustrative embodiment.
FIG. 2 illustrates one possible configuration of a radial layout soft keypad implemented in the system of FIG. 1.
FIG. 3 illustrates movement of a predicted word from a peripheral region to a central region of theradial layout soft keypad of FIG. 2.
FIG. 4 shows an exemplary user gesture that may be used in conjunction with text entry via the radial layout soft keypad of FIG. 2.
FIG. 5 illustrates portions of at least one processing device that is used to perform processing operations associated with the radial layout soft keypad of FIG. 2.
FIG. 6 is a state diagram illustrating operation of a controller within the one or more processing devices of FIG. 5.
FIG. 7 is a block diagram of an information processing system having a graphical user interface comprising a radial layout soft keypad in another illustrative embodiment.

### Written Description

Embodimentsof the invention will be illustrated herein in conjunction with exemplary information processingsystems that include user interfaces for entry of text or other information using user gestures or other selection mechanisms.It should be understood, however, that embodiments of the invention are more generally applicable to any processing system or device in which it is desirable to provide an improved user interface for efficient entry of text or other information.

Accordingly, the term "soft keypad" as used herein is intended to be broadly construed,so as to encompass any of a wide variety of different arrangements of multiple actuatable keys that may be presented via at least a portion of a user interface.The keys are not limited to entry of text characters but are more generally applicable to entry of any type of input information that may be provided to a device or system via the user interface, including input commands and other control information.

Also, the term "key" as used herein is therefore intended to be broadly construed so as to encompass a wide variety of different arrangements of characters, commands and controls. A key may be part of a user interface that does not include a soft keypad, but instead is implemented using another type of arrangement of one or more keys.

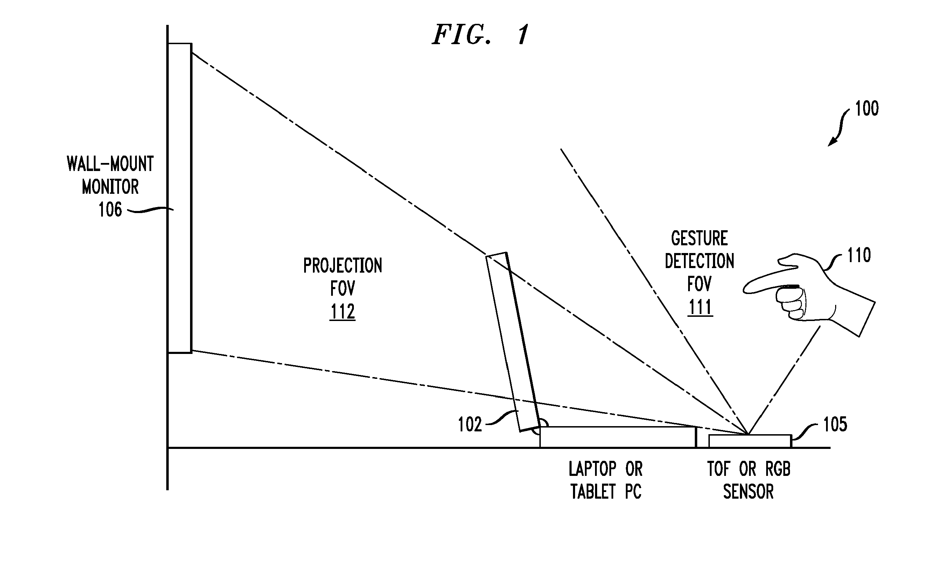

FIG. 1 shows one embodiment of an information processing system 100 having a graphical user interface comprising a radial layout soft keypad. The system in this embodiment is in the form of a GR-based system comprising a laptop or tablet personal computer (PC) 102, a time of flight (TOF) image sensor or a red-green-blue (RGB) color image sensor 105, and a wall-mounted monitor 106. The GR-based system is configured to recognize a plurality of gestures made by a user hand 110. The TOF or RGB sensor 105 has a gesture detection field of view (FOV) 111 in which user gestures are detected and a projection FOV 112 associated with the wall-mounted monitor.

The projection FOV 112 in the present embodiment is an FOV through which the radial layout soft keypad is projected onto the wall-mounted monitor 106, illustratively through a projection device associated with sensor 105, so as to be made visible to a user.Alternatively, such a projection device could be incorporated into the laptop or tablet PC 102, or the radial layout soft keypad could be displayed directly on a display of the laptop or tablet PC 102, in which case the wall-mounted monitor 106 could be eliminated.

Accordingly, the particular arrangement of PC 102, sensor 105 and wall-mounted monitor 106 is exemplary only, and other arrangements of these or alternative components may be used in other embodiments. Also, characteristics of this embodiment such as the configuration of the sensor or the FOVs are presented by way of illustrative example only, and should not be construed as limiting in any way. Alternative embodiments can utilize other types of sensors, possibly implemented in depth imagers, cameras or other similar devices, and the particular FOVs can be altered to satisfy the particular needs of a given application. As one example, the vertical sensor orientation illustrated in FIG. 1 may be modified such that the sensor is rotated by about 45 to 90 degrees relative to the vertical sensor orientation. Numerous alternative orientations of the sensor and the associated FOVs are possible.

The system 100 of FIG. 1 in some implementations comprises a video gaming system or other type of GR-based system that generates images in order to recognize user gestures. However, the user interface techniques disclosed herein can be adapted for use in a wide variety of other systems requiring a gesture-based human-machine interface, including consumer kiosks as well as other non-touch user interface computing environments. In addition, these techniques can be adapted for use in numerous applications other than gesture recognition. Thus, the user may interact with the keypad in other embodiments using a wand, eye gaze direction or any other means of conveying key selection, acceptance and rejection.Those skilled in the art will recognize that the detection functionality of the system will be modified accordingly to accommodate such non-GR-based arrangements.

The laptop or tablet PC 102 in the system of FIG. 1 is one example of what is more generally referred to herein as a "processing device." A wide variety of other types of processing devices may be used, including mobile telephones, gaming system consoles, kiosks and devices associated with other GR-based or non-GR-based systems. Systems may comprise one or more processing devices as well as other elements.

Although shown as a separate element in FIG. 1, the sensor 105 in other embodiments may be at least partially incorporated into an associated processing device. By way of example, a computer such as PC 102 may be configured to incorporate the sensor 105. Also, the sensor itself may be considered a processing device as that term is broadly defined herein. The wall-mounted monitor 106 is considered one example of a monitor of a corresponding processing device. Such a monitor is more generally referred to herein as a "display." Other types of monitors or displays may be used to present a radial layout soft keypad as disclosed herein, including by way of example a display of the laptop or tablet PC 102 in the FIG. 1 embodiment, or a display of a mobile telephone or other type of processing device.

A given processing device generally comprises a processor coupled to a memory. The processor executes software code stored in the memory in order to direct at least a portion of the operation of the corresponding system.

The processing device may but need not include a network interface that supports communication with other system elements over a network. Such a network in some embodiments may comprise a wide area network (WAN) such as the Internet, a local area network (LAN), a cellular network, or any other type of network, as well as combinations of multiple networks. The networkinterface may be implemented using one or more conventional transceivers.

The processor may comprise, for example, a microprocessor, an application-specific integrated circuit (ASIC), a field-programmable gate array (FPGA), a central processing unit (CPU), an arithmetic logic unit (ALU), a digital signal processor (DSP), or other similar processing device component, as well as other types and arrangements of processing circuitry, in any combination.

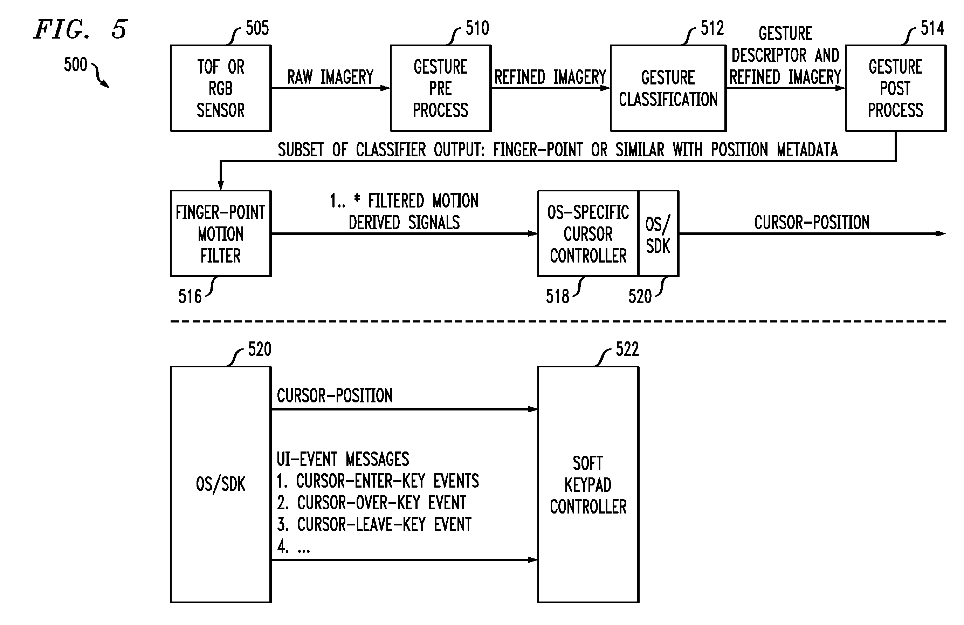

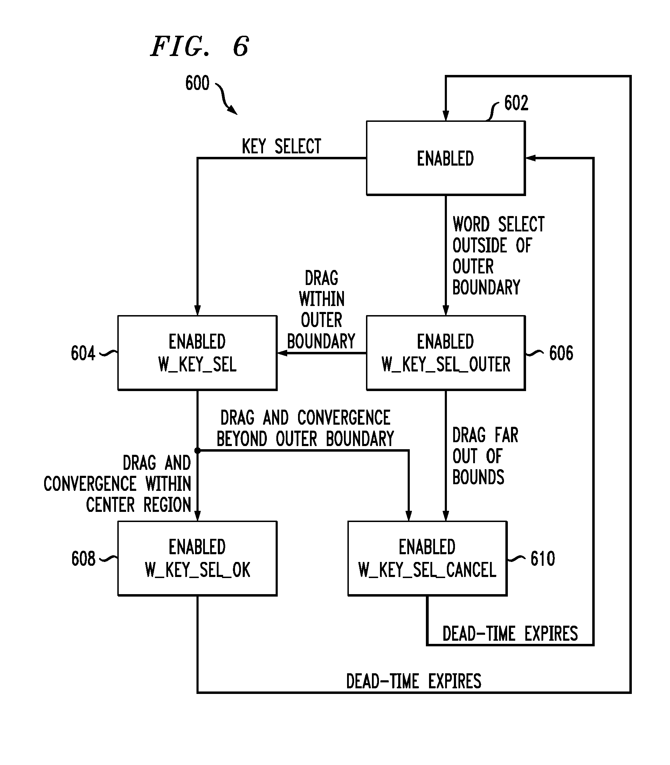

The memory stores software code for execution by the processor in implementing portions of the functionality of the system, such as portions of the system as illustrated in FIGS. 5 and 6. A given such memory that stores software code for execution by a corresponding processor is an example of what is more generally referred to herein as a computer-readable storage medium having computer program code embodied therein, and may comprise, for example, electronic memory such as random access memory (RAM) or read-only memory (ROM), magnetic memory, optical memory, or other types of storage devices in any combination.Articles of manufacture comprising such computer-readable storage media are considered embodiments of the present invention.

As indicated above, the processor of a given processing device may comprise portions or combinations of a microprocessor, ASIC, FPGA, CPU, ALU, DSP or other type of processing circuitry.

It should therefore be appreciated that embodiments of the invention may be implemented in the form of integrated circuits. In a given such integrated circuit implementation, identical die are typically formed in a repeated pattern on a surface of a semiconductor wafer. Each die includes, for example, at least a portion of a processing device as described herein, and may further include other structures or circuits. The individual die are cut or diced from the wafer, then packaged as an integrated circuit. One skilled in the art would know how to dice wafers and package die to produce integrated circuits. Integrated circuits so manufactured are considered embodiments of the invention.

Again, the particular configuration of information processing system of FIG. 1 is exemplary only, and the system in other embodiments may include other elements in addition to or in place of those specifically shown, including one or more elements of a type commonly found in a conventional implementation of such a system. For example, other arrangements of processing modules and other components may be used in implementing the sensor, computer and monitor. Accordingly, functionality associated with multiple elements in the FIG. 1 embodiment may be combined into a lesser number of elements in other embodiments. Also, as mentioned above, components such as the sensor, computer and monitor can be at least partially combined into a given processing device.

As mentioned previously, the system 100 of FIG. 1 implements a user interface comprising a radial layout soft keypad and associated GR-based control mechanisms for text entry within the system.In the embodiment as illustrated in FIG. 1, the radial layout soft keypad is presented on the wall-mounted monitor 106 via projection FOV 112 and a user interacts with the radial layout soft keypad by making hand gestures in the gesture detection FOV 111 for detection by the sensor 105. However, as noted above, the user interface can be adapted in a straightforward manner for entry of other types of information, and accordingly is not limited to the text entry arrangements shown in certain illustrative embodiments. Also, although user gestures are used to enter information via the radial layout soft keypad in the FIG. 1 system, it is possible to use other types of selection mechanisms in conjunction with a radial layout soft keypad, including, for example, wand-based or gazed-based selection mechanisms. Moreover, embodiments of the invention can be implemented without the use of a radial layout soft keypad. Various control mechanisms described herein can therefore be more generally applied to user interfaces that do not necessarily comprise a radial layout soft keypad.

In the FIG. 1 system, text entry is achieved via a user interface that comprises a radial layout soft keypad and associated selection mechanisms.The text entry is augmented in some embodiments with character prediction and word prediction functionality.

As will become apparent, the use of the radial layout soft keypad and associated character selection mechanisms in illustrative embodiments provides improved text entry in GR-based systems as well as a wide variety of other types of systems and devices. For example, the radial layout soft keypad can be configured to provide enhanced character-oriented text entry in terms of factors such as characterlayout, motion-per-character selection, characters-per-minute, words-per-minute, and errorrate.

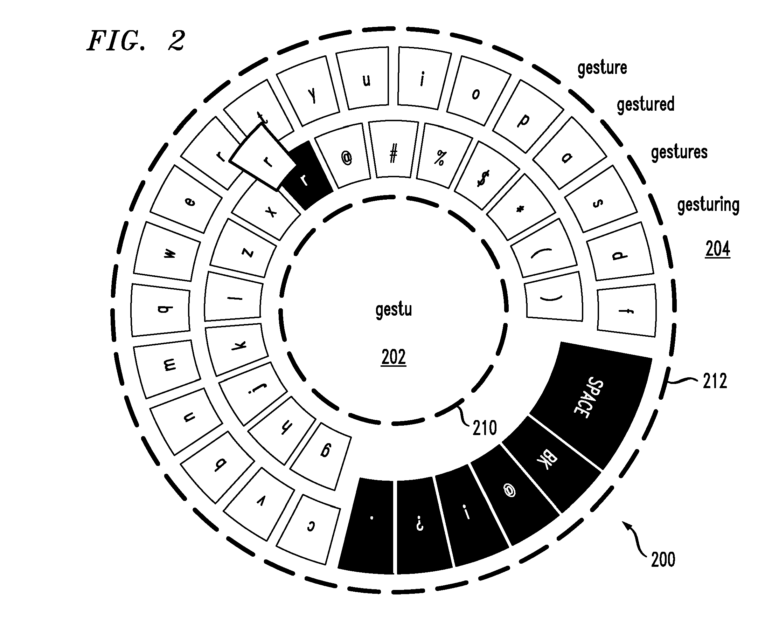

FIG. 2 shows an example of a radial layout soft keypad 200 implemented in a user interface of the FIG. 1 system in one embodiment. In this embodiment, the keys are laid out in radial fashion around a central region 202.User interaction with the soft keypad includes the use of a finger-point style gesture with angular or translational motions to position a cursor over a given one of the keys. The central region 202 is also referred to in the context of some embodiments herein as a "center region."

Key selection in the present embodiment occurs automatically using cursor-motion-based convergence criteria relative to key position,removing the need for an additional gesture motion such as a poke to select the key.

Embodiments of the invention can incorporate logic to disambiguate which of multiple keys is most likely to have been the intended selection, possibly based on history data regarding previous user input. Such logic can be a beneficial augmentation to aid in the selection of characters using hand motion in free space.

Acceptance of a selected key involves angular or translational motion dragging a shadowkey toward and over the central region.

Rejection of the selected key involves further angular or translational motion away from the central region and outside the outer circular bounds of the keypad.

For practiced users, a typing process using the radial layout soft keypad 200 approaches a fluid motion using only finger-point gesturing with angular motion.A similar key-selection mechanism involving angular or translational finger-point motions is used for selection, acceptance, and rejection of predicted words arranged outside the outer-right boundary of the keypad.

The radial layout soft keypad 200 as illustrated in FIG. 2 is presented on a graphical user interface within the FIG. 1 system. For example, it may be in the form of a desktop or application overlay on the graphical user interface. As mentioned above, the user interface in the FIG. 1 system is presented on the wall-mounted monitor 106, but in other embodiments can be presented on other displays, such as a display of the PC 102 or a display of a mobile telephone, television set or other processing device or system.

As shown in FIG. 2, the exemplary keypad 200 includes an inner row of keys and an outer row of keys. The inner and outer rows of keys are examples of what are more generally referred to herein as "concentric groupings" of keys arranged around the central region 202.Also, in the present embodiment, all of the keys of the concentric groupings of keys are simultaneously visible in the radial layout soft keypad 200. More particularly, if the concentric circular rows are viewed as being separated into four quadrants, all four quadrants are simultaneously displayed in their entirety. Other types of concentric groupings can be used in other embodiments. The portion of the keypad 200 beyond the outer row of keys includes a peripheral region 204, as well as other peripheral regions.

In the exemplary radial layout soft keypad of FIG. 2, the concentric groupings of keys are more particularly arranged as respective concentric circular rows of keys substantially surrounding the central region 202. The term "substantially surrounding" as used herein is intended to encompass arrangements involving surrounding of more than half of the central region 202. Thus, in the FIG. 2 embodiment, the inner row of keys substantially surrounds the central region 202, even though that row of keys does not entirely surround the central region 202.The outer row of keys also substantially surrounds the central region 202, and more particularly entirely surrounds the central region 202, although it should be noted that the darker shaded keys at the lower right are larger in size thanother keys of the outer row. The darker shaded keys in this embodiment are illustratively considered part of the outer row of keys.

In other embodiments, alternative concentric groupings such as concentric arrangements of squares, ovals or other shapes may be used. The term "concentric" as used in this context should be understood to encompass partial surrounding arrangements of the type shown in FIG. 2 and described above.

The two concentric circular rows of keys in the FIG. 2 embodiment provide sufficient key space to accommodate keys representing the full English alphabet plus several additional symbols or functions. This key arrangement corresponds to one possible mode, and other modes may include alternative key sets, such as capital letters, numerals, etc.

A subset of the keys is illustratively presented with fixed assignments across all modes of operation.In the keypad 200, this subset of keys includes the darker shaded keys shown at the lower right and comprises common non-alphanumeric characters and functions including but not limited to space and backspace (BK). The size of these keys is increased relative to the size of the other keys, and the different shading is used, reflecting an expected higher frequency of selection.The use of increased key size and unique shading facilitates selection of those keys using hand motion in freespace.

One or more keys of the keypad 200 that are illustratively configured with fixed assignments per mode can also but also supporting temporary dynamic reassignment based on past user interactions, external context or other factors, or combinations thereof.In one embodiment, these keys are positioned in a particular quadrant and utilize a unique shading, sizing or other characteristic(s) to denote dynamically assigned symbols or other characters, thereby conveying to the user that these keys have special value relative to other keys.

As indicated above, the radial layout soft keypad 200 is presented on a display such as wall-mounted monitor 106 and a user interacts with the radial layout soft keypad by making hand gestures in free space in the field of view 111 of image sensor 105 without physically contacting the display.

In some embodiments, a gesture of a first type controls selection of a given one of the keys and gestures of respective second and third types control respective acceptance and rejection of the selected key.

Thus, for example, with reference to FIG. 2, a user selects a particular key, such as the key corresponding to letter "r" as shown in the figure, by using a first type of gesture. Upon detection of the gesture of the first type, the portion of the keypad corresponding to the selected key is presented in a highlighted form.

The particular key corresponding to the lowercase letter "r" is selected as the user attempts to type the word "gesture." The portion of the word already typed by previous key selection and acceptance is shown in the central region 202 as "gestu."

As illustrated for the selected key "r" in FIG. 2, the highlighted form in this embodiment comprises an additional instance of the selected key that is partially overlaid in an offset manner over an initial instance of the selected key. This is an example of what is also referred to herein as a "shadowkey" representation of the selected key.

In some embodiments, the gesture controlling acceptance of a selected key and the gesture controlling rejection of a selected key are detected based on motion characteristics in a plane substantially parallel to a plane of the display without requiring additional motion along an axis orthogonal to the plane of the display.

For example, detection of a gesture directing inward movement of a selected key toward the central region 202 in the FIG. 2 embodiment indicates acceptance of the selected key and detection of a gesture directing outward movement of the selected key away from the central region 202 indicates rejection of the selected key. These acceptance and rejection gestures may comprise, for example, respective flick gestures made using a pointing finger, such as flick up, flick down, flick left, flick right, etc. Such flick gestures are examples of what are more generally referred to herein as "finger-point" gestures. Other types of flick gestures in any combination may additionally or alternatively be used.

Accordingly, the acceptance or rejection of a selected key in the FIG. 2 embodiment does not require additional press or poke motion along the axis orthogonal to the display plane, thereby reducing the orthogonal motion required to actuate a particular key.

The radial layout soft keypad 200 therefore supports use of high velocity hand-centric angular gesture motion in free space toward the centralregion 202 or away from the central region 202 for accepting a key selection or rejecting a key selection, respectively. For example, angular or absolute motion in freespace can be used to "drag" or otherwise position a selected key either within the central region 202 or within a peripheral region such as peripheral region 204 for acceptance of key selection or rejection of key selection, respectively.The motion characteristics distinguishing the above-noted flick gestures include, for example, motion velocity and acceleration.

The radial layout soft keypad 200 as illustrated in FIG. 2 comprises an inner boundary 210 separating the central region 202 from the concentric circular rows of keys and an outer boundary 212separating the concentric circular rows of keys from a peripheral region of the radial layout soft keypad.At least one of the inner and outer boundaries 210 and 212 is made visually perceptible to a user when viewing the radial layout soft keypad as presented on a display.In the present embodiment, both of the boundaries 210 and 212 are assumed to be visible to a user, and are presented on the display in the form of respective dashed-line circles. Other types of annotations of the inner and outer boundaries may be used in other embodiments in order to emphasize the utility of the corresponding regions for respective acceptance or rejection of a selectedkey.

In some embodiments, the system is configured such that detection of a gesture directing inwardmovement of a selected key over the inner boundary 210 and into the central region 202 indicates acceptance of the selected key, and detection of a gesture directing outward movement of a selected key over the outer boundary 212 and into a peripheral region such as peripheral region 204 indicates rejection of the selected key.

The peripheral region 204 in the keypad 200 presents predicted words based on previous selected key acceptances by the user, such that the user can select one of the predicted words instead of typing the remainder of a given word. Thus, for example, the user in the example of FIG. 2 is assumed to have typed the partial word "gestu" by individual selection and acceptance of the corresponding letters. The user has also selected the key corresponding to the letter "r" as indicated. However, rather than accept the selected letter "r" to continue the typing of the current word, the user can instead select a corresponding one of the predicted words presented in the peripheral region 204. A wide variety of different word prediction algorithms may be used to generate the predicted words.

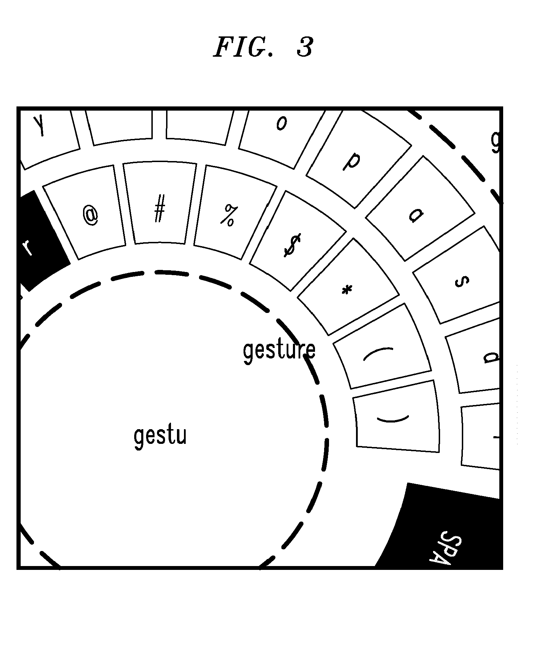

In the keypad 200 as shown in FIG. 2, upon selection of the key corresponding to the lowercase letter "r," multiple predicted words including "gesture," "gestured," "gestures" and "gesturing" appear in the outer region as indicated. Selection and acceptance of one of the predicted words may be controlled by similar gestures used to select and accept particular keys. More particularly, after selecting a particular one of the predicted words using a selection gesture, the acceptance of the selected predicted word is controlled based on detection of a gesture directing movement of the selected word toward the central region 202.The user therefore selects one of thepredicted words using motion-based selection followed by motion-based acceptance or rejection, as indicated above.For example, as illustrated in FIG. 3, the user transitions the selected word"gesture" to the central region for acceptance.

As mentioned previously, the keypad 200 in this embodiment may be viewed as comprising four quadrants, with the inner and outer rows of keys substantially spanning first, second and third quadrants.The fourth quadrant includes a portion of only one of the two rows of keys. These fourth quadrant keys, as noted above, are shaded for emphasis in the figure and rendercommon text characters including space, BK, @, and various punctuation marks, also referred to herein as "symbolic characters" or "non-alphanumeric characters," or simply as "symbols." In at least portions of the first and second quadrants, the inner row of keys renders additional text characters as illustrated.Theseand any other characters may be combined with predicted characters established using a character prediction algorithm.

The keypad 200 as illustrated in FIG. 2 is assumed to be configured in a first mode which provides primary lower-case alphabetic characters, but may be selectively placed into a plurality of additional modes, such as, for example, an uppercase-alphabetic character mode, a symbolic mode, and a numeric mode. Numerous other types and combinations of multiple modes may be used. The user transitions the keypad between these and possibly additional or alternative modes using, for example, gestures comprising a swipe-up motion or a swipe-down motion, although other hand-centric gesture motions in free space within the FOV 111 of image sensor 105 can be used.Character predictions are updated based on past input, and corresponding keys are shaded for emphasis whenrendering predicted characters.

The keypad 200 may be positioned arbitrarily in the graphical user interface of the system 100 and includes support for arbitrary scaling within the user interface. A finger-point gesture with angular or translational wrist motion is the primary mechanism of user interaction with the keypad. Key selection is based on cursormotion, specifically resulting from the monitoring of several weighted moving averages over the keypad.Upon selection, a shadow key representation of the selected key is rendered under the cursor, as illustrated for letter "r" in FIG. 2. The user accepts the selection by dragging the cursor and shadow key toward and over the central region of the keypad.The user rejects the selection by dragging the cursor and shadow key outside of the outer-boundary of the keypad.

As indicated above, selection of words is similar to selection of characters and includes motion-based selection followed by motion-based acceptance or rejection.

The particular layout of alphabetic and symbolic characters as illustrated in FIG. 2 is presented by way of example only. Numerous other types of radial layouts may be used for a soft keypad as disclosed herein. The term "radial layout" is therefore intended to be broadly construed so as to comprise, for example, keypad layouts in which a plurality of selectable keys are arranged in one or more rows around a central region.

Other embodiments can be implemented using a wide variety of other soft keypad layouts or more generally other user interfaces. Accordingly, embodiments of the invention are not limited to use with radial layouts or soft keypads of the type described above.

As noted previously, the keys need not correspond to text characters, but may instead represent other types of selectable commands or controls within a given system. For example, keys may be selected in a given system to invoke actions directly, to invoke actions on user interface elements underlying a central region of a radial layout, or to select mode of operation. A more particular example of the latter mode selection may involve selecting a particular tool from an application-specific toolbox.

Also, other definitions of acceptance and rejection subsequent to key selection may be used. For example, particular regions used for accepting or rejecting selected keys may be arranged in an arbitrary layout, or certain gestures can be assigned for acceptance or rejection of key selection. As a more particular example of an arrangement of the latter type, a rapid-angular finger-point motion classifiable as a finger-point-based swipe may be used to accept or reject depending on the velocity of the angular motion. Such a gesture may be considered a type of flick gesture as that term is broadly used herein.

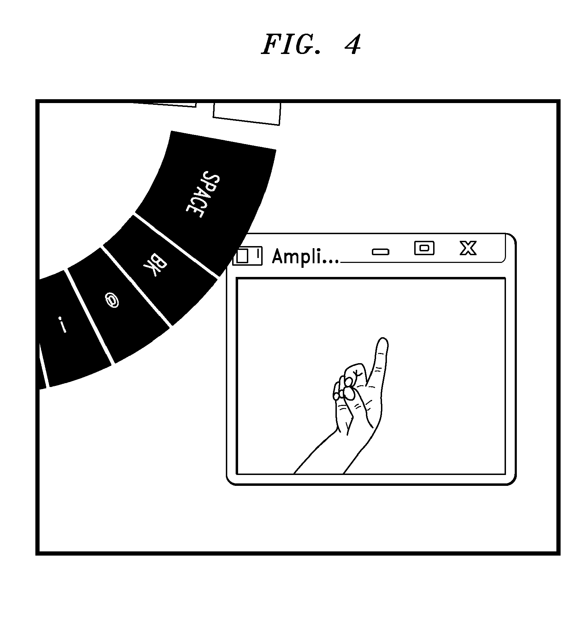

It was mentioned above that a finger-point gesture with angular or translational wrist motion is one possible mechanism of user interaction with the keypad in the illustrative embodiment of FIG. 2. An example of a static pose of a finger-point gesture suitable for use with the FIG. 2 keypad is shown in FIG. 4. It is to be appreciated, however, that numerous other user gestures as well as other types of motions may be used in GR-based embodiments of a radial layout soft keypad or other user interface comprising one or more keys as disclosed herein. Again, gesture recognition is not required, and other systems can be wand-based, gaze-based or based on other selection mechanisms.

FIG. 5 shows portions of at least one processing device that is used to perform processing operations associated with the radial layout soft keypad of FIG. 2. The various processing blocks shown in this embodiment are assumed to be implemented in at least one processing device comprising a processor coupled to a memory.For example, a given processing device as that term is broadly used herein may comprise both a sensor and an associated computer in a given embodiment, such as sensor 105 and PC 102. Alternatively, the sensor and the computer may be implemented as separate processing devices that communicate with one another, possibly over a network that is also coupled to additional processing devices.

In the FIG. 5 embodiment, a GR-based system 500 comprises a TOF or RGB sensor 502 that provides raw imagery to a gesture preprocessing module 510. The preprocessing module 510 generates refined imagery that is input to a gesture classification module 512, also referred to as a classifier.The gesture classification module 512 generates gesture descriptors from the refined imagery and provides the resulting gesture descriptors and the associated refined imagery to a gesture postprocessing module 514.The refined imagery at the output of the gesture classification module 512 may be further refined by module 512 relative to the refined imagery at its input.

The postprocessing module 514 provides at its output a subset of the classifier output illustratively comprising finger-point data or other similar data with associated position metadata. This subset of the classifier output is further processed in a finger-point motionfilter 516 which generatesas its outputs one or more filtered motion derived signals that are provided to an operating system (OS) specific cursor controller 518 having an associated OS/SDK 520,where SDK denotes software development kit and may comprise one or more application processing interfaces (APIs).

The OS/SDK 520 provides an OS-specific API for dispatch of cursor-position information as well as associated metadata comprising user interface event messages relating to the radial layout soft keypad 200. The event messages include, for example, cursor-enter-key events, cursor-over-key events, cursor-leave-key events, etc.

The soft keypad controller 522 of FIG. 5 in the present embodiment is assumed to operatein accordance with the state diagram 600 shown in FIG. 6. The corresponding state machine in this embodiment includes the following states:
DISABLED
ENABLED
ENABLEDW_KEY_SEL
ENABLEDW_KEY_SEL_OUTER
ENABLEDW_KEY_SEL_OK
ENABLEDW_KEY_SEL_CANCEL

In the state names given above, "W" denotes the word "with" and "SEL" denotes the word "selection." The DISABLED state is not explicitly shown in the state diagram 600, but generally denotes a state in which the radial layout soft keypad 200 is not active and therefore not available for use in processing gesture input. The five distinct ENABLED states listed above are shown in the state diagram 600 and are denoted by reference numerals 602, 604, 606, 608 and 610, respectively.

As indicated in the state diagram 600, from the ENABLED state 602 in which the radial layout soft keypad 200 is active and available for use in processing gesture input from a user,selection of a particular key causes the state machine to transition to the ENABLEDW_KEY_SELstate 604, and selection of a particular word displayed in peripheral region 204 outside of outer boundary 212 causes the state machine to transition to the ENABLED W_KEY_SEL_OUTER state 606.

From the ENABLED W_KEY_SEL state 604, detection of gesture-based input indicating a dragging of the selected key and convergence within the central region 202 causes the state machine to transition to the ENABLED W_KEY_SEL_OK state 608, such that the selected key is accepted.

Also from the ENABLED W_KEY_SEL state 604, detection of gesture-based input indicating a dragging of the selected key and convergence beyond the outer boundary 212 causes the state machine to transition to the ENABLED W_KEY_SEL_CANCEL state 610, such that the selectedkey is rejected.

From the ENABLED W_KEY_SEL_OUTER state 606, detection of gesture-based input indicating a dragging of the selected word sufficiently far "out of bounds" beyond the peripheral region 204 causes the state machine to transition to the ENABLED W_KEY_SEL_CANCEL state 610, such that the selected word is rejected.

Also from the ENABLED W_KEY_SEL_OUTER state 606, detection of gesture-based input indicating a dragging of the selected word within the outer boundary 212 causes the state machine to transition to the ENABLED W_KEY_SEL state 604, from which further dragging and convergence within the central region 202 causes a transition to the ENABLED W_KEY_SEL_OK state 608, such that the selected word is accepted. The selected word can also be rejected from the ENABLED W_KEY_SEL state 604, by further dragging and convergence beyond the outer boundary 212 causing a transition to the ENABLED W_KEY_SEL_CANCEL state 610.

After acceptance of a selected key or word in state 608 or rejection of a selected key or word in step 610, a timer is started that provides a specified "dead time" between consecutive instances of selection-acceptance or selection-rejection. After dead-time expiration in state 608 or state 610, the state machine returns to state 602 as indicated.

It is to be appreciated that theparticular states shown in FIG. 6 and described above are exemplary only, and numerous other types of state-based control may be used in other embodiments.

Also, the particular components, operations and other functionality described above in conjunction with FIGS.5 and 6 are presented by way of example only, and other embodiments of the invention may utilize other types and arrangements of processing device components, operations and other functionality for providing user interfaces of the type disclosed herein.

In some embodiments, support for optical character recognition (OCR) functionality may be provided. For example, the central region of a radial layout soft keypad may be configured to support OCR. In one possible arrangement of this type, a user finger-point-based cursor may be used to "write" a character on the central region, resulting in a vector of historic position data useful for input into an OCR algorithm. This process may be extended to support a sequence of characters written on the central region.The radial layout soft keypad and associated selection mechanisms enhance the OCR functionality by providing a mechanism for error correction or selectionof text characters not classifiable via the OCR algorithm.

Agiven embodiment of the invention can implement OCR functionality of the type described above using one or more additional processing operations to segment individual characters. For example, an OCR classifier can be configured to segment individual characters using white space or other features, taking into account the possibility that the vector of historic position data may not show "pen lifts" between letters and may contain overlapped letters separated in time.

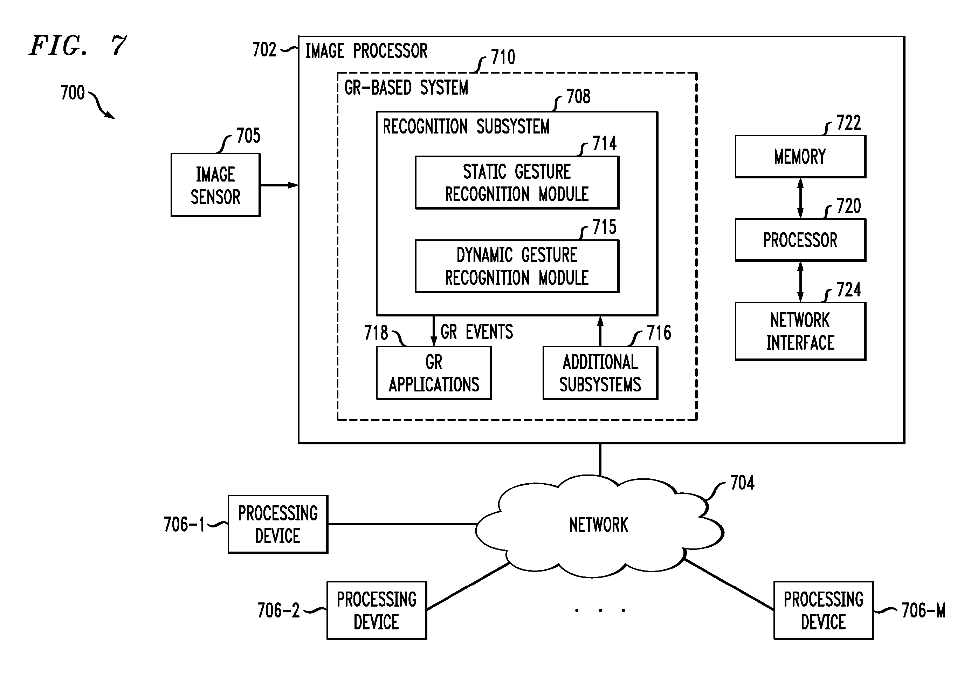

Referring now to FIG. 7, another illustrative embodiment of an information processing system 700 having a graphical user interface comprising a radial layout soft keypad is shown.Like the embodiment of FIG. 1, this embodiment utilizes gesture recognition to support a graphical user interface comprising the radial layout soft keypad 200 of FIG. 2.

The information processing system 700 comprises an image processor 702 that is configured for communication with a network 704 and an image sensor 705. The image processor 702 is coupled via network 704 to a plurality of processing devices 706-1, 706-2, .. .706-M.The image processor 702 implements a recognition subsystem 708 within a GR-based system 710. The GR-based system 710 in this embodiment processes input images from the image sensor 705 and generates corresponding GR-based output. The GR-based output may be utilized within the GR-based system 710 or supplied to one or more of the processing devices 706 or to other system components not specifically illustrated in this diagram. The radial layout soft keypad 200 is illustratively presented on a display associated with one of the processing devices 706, although it could alternatively be presented on a display associated with a processing device that implements the image processor 702.

The recognition subsystem 708 of GR-based system710 more particularly comprises a static gesture recognition module 714 and a dynamic gesture recognition module 715. Additional recognition modules may be included, such as a recognition module configured to recognize cursor gestures.

The recognition subsystem 708 receives inputs from additional subsystems 716, which illustratively comprise one or more image processing subsystems configured to implement functional modules associated with gesture recognition in the GR-based system710, such as, for example, functional modules for input frame acquisition, noise reduction, background estimation and removal, or other types of preprocessing. In some embodiments, the background estimation and removal block is implemented as a separate subsystem that is applied to an input image after a preprocessing module is applied to the image.

It should be understood, however, that these particular functional modules are exemplary only,and other embodiments of the invention can be configured using other arrangements of additional or alternative functional modules.

In the FIG. 7 embodiment, the recognition subsystem 708 generates GR events for consumption by one or more of a set of GR applications 718. A given one of the applications 718 is assumed to be an application supporting the radial layout soft keypad 200 of FIG. 2, possibly in conjunction with one of the processing devices 706. For example, the GR events may comprise information indicative of recognition of one or more particular gestures within one or more input image frames, such that a given GR application in the set of GR applications 718 can translate that information into a particular command or set of commands to be executed by that application. Accordingly, the recognition subsystem 708 recognizes within the image a gesture from a specified gesture vocabulary and generates a corresponding gesture pattern identifier (ID) and possibly additional related parameters for delivery to one or more of the applications 718. The configuration of such information is adapted in accordance with the specific needs of the application.

Additionally or alternatively, the GR-based system710 may provide GR events or other information, possibly generated by one or more of the GR applications 718, as GR-based output to one or more of the processing devices 706. In other embodiments, at least a portion of the set of GR applications 718 is implemented at least in part on one or more of the processing devices 706.

Portions of the GR-based system710 may be implemented using separate processing layers of the image processor 702. These processing layers comprise at least a portion of what is more generally referred to herein as "image processing circuitry" of the image processor 702. For example, the image processor 702 may comprise a preprocessing layer implementing a preprocessing module and a plurality of higher processing layers for performing other functions associated with recognition of gestures within frames of an input image stream from the image sensor 705.Such processing layers may also be implemented in the form of respective subsystems of theGR-based system710.

It should be noted, however, that GR-based embodiments of the invention are not limited to recognition of static or dynamic hand gestures, but can instead be adapted for use in a wide variety of other machine vision applications involving gesture recognition, and may comprise different numbers, types and arrangements of modules, subsystems, processing layers and associated functional blocks.

For example, as mentioned previously, embodiments of the invention can be implemented without a radial layout soft keypad, possibly using flick gestures or other gestures of the type described above, in conjunction with other types of user interfaces.In some arrangements without a radial layout soft keypad, a single control or a group of controls associated with a given user interface can be actuated by bringing a gesture-controlled cursor proximate to the control(s) so as to causethe control(s) to "stick" to the cursor and then utilizing a flick up or flick down gesture to either accept or reject the control(s).

Also, certain processing operations associated with the image processor 702 in the present embodiment may instead be implemented at least in part on other devices in other embodiments. For example, preprocessing operations may be implemented at least in part in the image sensor 705.It is also possible that one or more of the applications 718 may be implemented on a different processing device than the subsystems 708 and 716, such as one of the processing devices 706.

Moreover, it is to be appreciated that the image processor 702 may itself comprise multiple distinct processing devices, such that different portions of the GR-based system710 are implemented using two or more processing devices. The term "image processor" as used herein is intended to be broadly construed so as to encompass these and other arrangements.

It should also be noted that the image processor 702 may be at least partially combined with the image sensor 705 on a common processing device.

In the present embodiment, the GR-based system 710 of image processor 702 is configured to recognize hand gestures, although this embodiment can be adapted in a straightforward manner for use with other types of gesture recognition processes.

The particular arrangement of subsystems, applications and other components shown in image processor 702 in the FIG. 7 embodiment can be varied in other embodiments. For example, an otherwise conventional image processing integrated circuit or other type of image processing circuitry suitably modified to perform processing operations as disclosed herein may be used to implement at least a portion of one or more of the components 714, 715, 716 and 718 of image processor 702. One possible example of image processing circuitry that may be used in one or more embodiments of the invention is an otherwise conventional graphics processor suitably reconfigured to perform functionality associated with one or more of the components 714, 715, 716 and 718.

The processing devices 706 may comprise, for example, computers, mobile phones, servers or storage devices, in any combination. One or more such devices also may include, for example, display screens or other user interfaces that are utilized to present images generated by the image processor 702. The processing devices 706 may therefore comprise a wide variety of different destination devices that receive GR-based output from the image processor 702 over the network 704, including by way of example at least one server or storage device that receives one or more processed image streams from the image processor 702.

Although shown as being separate from the processing devices 706 in the present embodiment, the image processor 702 may be at least partially combined with one or more of the processing devices 706. Thus, for example, the image processor 702 may be implemented at least in part using a given one of the processing devices 706. As a more particular example, a computer or mobile phone may be configured to incorporate the image processor 702 and possibly a given image source such as image sensor 705.Image sources utilized to provide input images in the information processing system 700 may therefore comprise cameras or other imagers associated with a computer, mobile phone or other processing device. As indicated previously, the image processor 702 may be at least partially combined with one or more image sources or image destinations on a common processing device.

The image processor 702 in the present embodiment is assumed to be implemented using at least one processing device and comprises a processor 720 coupled to a memory 722. The processor 720 executes software code stored in the memory 722 in order to control the performance of image processing operations. The image processor 702 also comprises a network interface 724 that supports communication over network 704. The network interface 724 comprises one or more conventional transceivers. In other embodiments, the image processor 702 need not be configured for communication with other devices over a network, and in such embodiments the network interface 724 may be eliminated.

The processor 720 may comprise, for example, a microprocessor, an ASIC, an FPGA, a CPU, an ALU, a DSP, or other similar processing device component, as well as other types and arrangements of image processing circuitry, in any combination.

The memory 722 stores software code for execution by the processor 720 in implementing portions of the functionality of image processor 702, such as the subsystems 708 and 716 and the GR applications 718. As mentioned previously, a given such memory that stores software code for execution by a corresponding processor is an example of what is more generally referred to herein as a computer-readable storage medium having computer program code embodied therein, and may comprise, for example, electronic memory such as RAM or ROM, magnetic memory, optical memory, or other types of storage devices in any combination.Articles of manufacture comprising such computer-readable storage media are considered embodiments of the invention. The term "article of manufacture" as used herein should be understood to exclude transitory, propagating signals.

The particular configuration of information processing system 700 as shown in FIG. 7 is exemplary only, and the system 700 in other embodiments may include other elements in addition to or in place of those specifically shown, including one or more elements of a type commonly found in a conventional implementation of such a system.

For example, in some embodiments, the information processing system 700 is implemented as a video gaming system or other type of GR-based system that processes image streams in order to recognize user gestures. The disclosed techniques can be similarly adapted for use in a wide variety of other systems requiring a gesture-based human-machine interface, and can also be applied to other applications, such as machine vision systems in robotics and other industrial applications that utilize gesture recognition.

Also, as indicated above, GR-based embodiments of the invention are not limited to use in recognition of hand gestures, but can be applied to other types of gestures as well. The term "gesture" as used herein is therefore intended to be broadly construed.

It should be noted that various aspects of the above-described embodiments may be used separately from others in alternative embodiments.For example, the particular gestures used for key selection, acceptance and rejection as disclosed herein may be used with many different arrangements of actuatable keys. Similarly, radial layout soft keypads of the type illustrated in FIG. 2 do not require use of any particular type of gestures, and as indicated elsewhere herein may be used with various types of non-gesture input.

It should again be emphasized that the embodiments of the invention as described herein are intended to be illustrative only. For example, other embodiments of the invention can be implemented utilizing a wide variety of different types and arrangements of information processing systems, processing devices and processing operations than those utilized in the particular embodiments described herein.In addition, the particular assumptions made herein in the context of describing certain embodiments need not apply in other embodiments.These and numerous other alternative embodiments within the scope of the following claims will be readily apparent to those skilled in the art.

## Claims

1. Anapparatus comprising:
at least one processing device comprising a processor coupled to a memory;
said at least one processing device being configured to provide a user interface comprising a radial layout soft keypad;
wherein the radial layout soft keypad comprises a central region and one or more concentric groupings of keys arranged around the central region.

2. The apparatus of claim 1 wherein the one or more concentric groupings of keys are arranged as respective concentric circular rows of keys substantially surrounding the central region.

3. The apparatus of claim 1 wherein the radial layout soft keypad is presented on a display associated with the processing device and a user interacts with the radial layout soft keypad by making hand gestures in free space in a field of view of an image sensor without physically contacting the display.

4. The apparatus of claim 3 wherein a gesture of a first type controls selection of a given one of the keys and gestures of respective second and third types control respective acceptance and rejection of the selected key.

5. The apparatus of claim 4 wherein upon detection of the gesture of the first type the corresponding selected key is presented in a highlighted form in which an additional instance of the selected key is generated and partially overlaid in an offset manner over an initial instance of the selected key.

6. The apparatus of claim 3 whereina gesturecontrolling acceptance of a selected key and a gesture controlling rejection of a selected key are detected based on motion characteristics in a plane substantially parallel to a plane of the display without requiring additional motion along an axis orthogonal to the plane of the display.

7. The apparatus of claim 1 wherein detection of a gesture directing inward movement of a selected key toward the central region indicates acceptance of the selected key and detection of a gesture directing outward movement of the selected key away from the central region indicates rejection of the selected key.

8. The apparatus of claim 7 wherein the gestures directing respective inward and outward movement of the selected key towards and away from the central region comprise respective flick gestures.

9. The apparatus of claim 1 wherein the radial layout soft keypad comprises an inner boundary separating the central region from the one or more concentric groupings of keys and an outer boundary separating the one or more concentric groupings of keys from a peripheral region of the radial layout soft keypad.

10. The apparatus of claim 9 wherein at least one of the inner and outer boundaries is visually perceptible to a user when viewing the radial layout soft keypad as presented on a display.

11. The apparatus of claim 9 wherein detection of a gesture directing inward movement of a selected key over the inner boundary and into the central region indicates acceptance of the selected key.

12. The apparatus of claim 9 wherein detection of a gesture directing outward movement of a selected key over the outer boundary and into the peripheral region indicates rejection of the selected key.

13. The apparatus of claim 1 wherein the radial layout soft keypad further comprises a peripheral region in which one or more predicted words based on previous selected key acceptances by the user are presented for possible user selection and wherein acceptance of a selected one of the one or more predicted words is controlled based on detection of a gesture directing inward movement of the selected word toward the central region.

14. A method comprising:
generating a user interface comprising a radial layout soft keypad; and
processing user input to control actuation of particular keys of the radial layout soft keypad;
wherein the radial layout soft keypad comprises a central region and one or more concentric groupings of keys arranged around the central region; and
whereinthe method is implemented in at least one processing device comprising a processor coupled to a memory.

15. Amethod comprising:
providinga user interface comprising a plurality of keys;and
processing user input comprising one or more gestures to control actuation of a selected one of said keys;
whereindetection of a first gesture directing movement of the selected key in a first direction indicates acceptance of the selected key;
wherein detection of a second gesture directing movement of the selected key in a second direction different than the first direction indicates rejection of the selected key; and
whereinthe method is implemented in at least one processing device comprising a processor coupled to a memory.
